# EUROPEAN PATENT SPECIFICATION

(11) **EP 2 284 196 B1**
(45) Date of publication and mention of the grant of the patent: **21.03.2012**
(21) Application number: 10168044.5
(22) Date of filing: 01.07.2010
(51) Int. Cl.: C08F 2/00, C08F 12/00

(54) **Process for the preparation of expandable vinyl aromatic polymers with a reduced thermal conductivity by polymerization in suspension**
Verfahren zur Herstellung von expandierbaren vinylaromatischen Polymeren mit verringerten Wärmeleitfähigkeit durch Suspensionspolymerisation
Procédé de préparation des polymères vinyliques aromatiques expansibles à une conductivité thermique réduite par polymérisation en suspension

(30) Priority: 16.07.2009 IT MI20091266
(43) Date of publication of application: 16.02.2011
(73) Proprietor: Polimeri Europa S.p.A., 20097 San Donato Milanese (MI) (IT)
(72) Inventor: Ghidoni, Dario, 46023, GONZAGA (MN) (IT); Simonelli, Alessandra, 46100, MANTOVA (MN) (IT); La Piccirella, Andrea, 41100, MODENA (MO) (IT); Ponticiello, Antonio, 37060, MOZZECANE (VR) (IT)
(74) Representative: Coletti, Raimondo

(56) References cited:
- DE-A1- 1 694 517
- DE-A1- 1 933 564
- DE-A1- 3 914 292

## Description

The present invention relates to a process for the preparation of expandable vinyl aromatic polymers with a reduced thermal conductivity by polymerization in suspension.

More specifically, the present invention relates to a process for the preparation of expandable vinyl aromatic polymers by polymerization in suspension and the expandable compositions based on vinyl aromatic polymers thus obtained, capable of giving expanded articles with a low density and improved insulating capacity.

Even more specifically, the present invention also relates to expanded articles of vinyl aromatic polymers having a density ranging from 5 to 50 g/l, preferably from 10 to 25 g/l, having excellent thermal insulation properties, expressed by a thermal conductivity ranging from 25 to 50 mW/mK, preferably from 30 to 45 mW/mK, which is generally, on an average, even 10% lower than that of equivalent expanded articles obtained from non-filled materials currently on the market, for example EXTIR A-5000 of Polimeri Europa S.p.A. These articles are stable to deformations induced by exposure to solar radiations.

All the conditions mentioned in the description should be considered preferred conditions, even if not expressly indicated.

Expandable vinyl aromatic polymers and, among these, in particular, expandable polystyrene (EPS), are known products, long used for preparing expanded articles which can be adopted in various applicative areas, among which, one of the most important is thermal insulation.

These expanded products are obtained by first swelling the polymer granules, in a closed environment, impregnated with an expandable fluid, for example an aliphatic hydrocarbon such as pentane or hexane, and then molding the swollen particles contained inside a mould, by means of the contemporaneous effect of pressure and temperature. The swelling of the particles is generally effected with vapour, or another gas, maintained at a temperature slightly higher than the glass transition temperature (Tg) of the polymer.

As already mentioned, a particular applicative field of expanded polystyrene is that of thermal insulation in the building industry where it is generally used in the form of flat sheets. The flat expanded polystyrene sheets are normally used with a density of about 25-30 g/l as the thermal conductivity of the polymer has a minimum at these values. It is not advantageous to fall below this limit, even if it is technically possible, as it causes a drastic increase in the thermal conductivity of the sheet which must be compensated by an increase in its thickness.

In order to overcome this drawback, it has been suggested, as described for example in published US patent US2008/0300328, to add small quantities (0.01-0.0001% by weight) of low-molecular-weight polyethylene wax to the polymerization formulation. The thermal conductivity is in fact lowered, reaching for example 37.4 mW/mk at 14 g/l whereas a reference EPS has a conductivity of about 39-40 mW/mk at the same density. This result is obtained thanks to the high cell diameter (about 230-240 µm) of the EPS product expanded at 14 g/l, a diameter which, however, jeopardizes the mechanical properties of the end-product. The compression stress, in fact, at 10% deformation is reduced from 75 KPa of a standard EPS to 55 KPa.

Filling the polymer with athermanous materials such as graphite, carbon black or aluminium, is also known. Athermanous materials are in fact capable of interacting with the radioactive thermal flow, reducing its transmission and consequently increasing the insulation of the expanded materials in which they are contained. In this way, it is possible to prepare thermo-insulating articles with a density even lower than 20 g/l, with a high insulating capacity, without having insulating reductions to be compensated with increases in thickness.

The thermo-insulating expanded articles in expanded polystyrene filled with athermanous materials, in particular graphite and/or carbon black, have the disadvantage of become easily deformed when exposed to solar irradiation, also for short periods of time, as the expanded particles of which they consist tend to collapse.

The Applicant has now found that it is possible to prepare an expandable polystyrene, also flameproof, without the above drawbacks, i.e. capable of giving articles (e.g. sheets) with a thermal conductivity, for example, of about 34-36 mW/mk at 17 g/l and with a compression stress, at 10% of deformation, of 75 KPa at 14 g/l, and therefore almost identical to that of a reference EPS, thanks to an optimum cell diameter of about 120-130 microns. The thermal conductivity of the sheets is substantially identical to that of EPS modified with athermanous materials. Possible deficits can be compensated by a moderate increase in the thickness.

This result can be considered extremely surprising, above all in the case of flameproof EPS, due to the fact that, as is known to experts in the field, the flame-retardant systems generally based on bromine, currently used for making EPS resins flameproof, tend to englobe water of the suspending system in the beads produced. As is known, water has a nucleating capacity and contributes to forming expanded articles, i.e. sheets, with a cellular structure having small-sized cells and consequently the articles have a reduced thermal insulation capacity. The present invention, on the other hand, has overturned this tendency. Furthermore, the sheets obtained can remain exposed to solar radiation without undergoing deformation.

An object of the present invention therefore relates to a process for the preparation of beads of expandable vinyl aromatic polymers, also flameproof, capable of producing expanded articles with a reduced thermal conductivity, by polymerization in aqueous suspension which comprises:
a. polymerizing at least one vinyl aromatic monomer, for example styrene or a mixture of styrene containing up to 25% by weight of α-methylstyrene, in aqueous suspension in the presence of a peroxide initiator system, active at a temperature higher than 80°C, an expanding agent, added before, during or after the polymerization, and possibly in the presence of:
   an amine having the general formula

      R1-N-R2R3 (I)

      wherein R1 represents a C₁₀-C₂₅ alkyl, iso-alkyl, aromatic, alkylaromatic radical, R2 and R3, the same or different, represent a hydrogen atom or a C₁-C₁₀ alkyl radical, optionally hydroxylated, a C₄-C₁₂ iso-alkyl radical, optionally hydroxylated, a C₆-C₁₈ aromatic radical, a C₇-C₁₈ alkylaromatic radical or the group -N-R2R3 forms a melamine unit or a C₄-C₈ heterocyclic unit with at least one nitrogen in the cycle; and
   a flame-retardant system comprising a brominated additive with a bromine content higher than 30% by weight;
b. cooling the aqueous suspension, at the end of the polymerization, with a cooling rate of 0.2-0.3°C/min, wherein the cooling rate is measured starting from a temperature equal to the glass transition temperature (Tg), of the final polymer produced, increased by 5-25°C up to the Tg of the same polymer reduced by at least 10°C, preferably lowered by a value ranging from 10 to 40°C.

According to the present invention, in the polymerization in suspension, the amine having general formula (I) is added in a quantity ranging from 0 to 500 ppm,, with respect to the weight of the monomeric base, preferably from 10 to 80 ppm, and is selected from stearyl melamine and ethoxylated alkyl amine in which the alkyl group has 15-16 carbon atoms.

The term "vinyl aromatic monomer", as used in the present description and claims, essentially means a product corresponding to the following general formula: 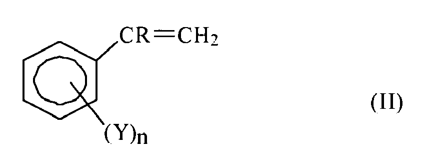 wherein R is a hydrogen or a methyl group, n is zero or an integer ranging from 1 to 5 and Y is a halogen, such as chlorine or bromine, or an alkyl or alkoxyl radical having 1 to 4 carbon atoms.

Examples of vinyl aromatic monomers having the general formula identified above, are: styrene, α-methylstyrene, para-methylstyrene, ethylstyrene, butylstyrene, dimethylstyrene, mono-, di-, tri-, tetra-and penta-chlorostyrene, bromo-styrene, methoxystyrene, acetoxystyrene, etc. Preferred vinyl aromatic monomers are styrene, α-methylstyrene and para-methylstyrene.

The vinyl aromatic monomers having general formula (II) can be used alone or in a mixture of up to 50% by weight with other co-polymerizable monomers. Examples of said monomers are (meth)acrylic acid, C₁-C₄ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid such as acrylamide, methacrylamide, acrylonitrile, methacrylonitrile, butadiene, ethylene, divinyl benzene, maleic anhydride, etc.. Preferred co-polymerizable monomers are acrylonitrile and methyl methacrylate.

Any expanding agent capable of being englobed in the polymeric vinyl aromatic matrix can be used in the process, object of the present invention. Typical examples of expanding agents are aliphatic hydrocarbons, Freon, carbon dioxide, alcohols such as ethyl alcohol, etc..

The expanding agents can be selected from aliphatic or cyclo-aliphatic hydrocarbons containing 3 to 6 carbon atoms such as n-pentane, iso-pentane, cyclopentane or mixtures thereof; halogenated derivatives of aliphatic hydrocarbons containing 1 to 3 carbon atoms, such as, for example, dichlorodifluoromethane, 1,2,2-trifluoro-ethane, 1,1,2-trifluoroethane; carbon dioxide; and ethyl alcohol.

The expanding agents are added in a quantity ranging from 1 to 10% by weight, with respect to the monomeric base, preferably during the polymerization phase, or subsequently by means of the re-suspension technology. In particular, the latter comprises the phases of:
- polymerizing the monomers in aqueous suspension in the presence of additives, for example a flame-retardant system;
- separating the beads thus obtained;
- re-suspending the beads in water and heating until their spherical form is obtained;
- adding the expanding agents to the suspension and keeping the beads in contact with the same until impregnation; and
re-separating the beads.

During the process, object of the present invention, conventional additives can be added to the aqueous suspension, such as pigments, stabilizing agents, nucleating agents, flame-retardant systems, antistatic agents, release agents, etc. In particular, a flame-retardant system can be added, comprising from 0.1 to 3%, with respect to the monomeric base, preferably from 0.4 to 2.2%, of a self-extinguishing brominated additive containing at least 30% by weight of bromine, preferably from 50 to 90% by weight, and 0 to 1% by weight, with respect to the monomeric base, preferably 0.01 to 0.4%, of a synergic product containing at least one C-C or 0-0 thermolabile bond, as described hereunder.

Flame-retardant agents particularly suitable for the present invention are brominated aliphatic, cycloaliphatic, aromatic compounds such as hexabromocyclododecane (EBCD), pentabromomonochlorocyclohexane and pentabromophenyl allyl ether, bis-tetrabromobisphenol-A allyl ether, the latter known on the market as "Chemtura BE51", of the company Chemtura, etc. Synergic products which can be used are dicumyl peroxide (DCP), cumene hydroperoxide, 3,4-dimethyl-3,4-diphenyl-hexane, 3,4-dimethyl-3,4-diphenyl butane, 3,4-diethyl-3,4-diphenyl-butane, 3,6,9-triethyl-3,6,9-trimethyl-1,4,7-triperoxyno-nane, etc.

The term "beads", as used in the present description and claims, essentially refers to the form of the vinyl aromatic polymer which derives from a preparation process in suspension. This process can alternatively also comprise the dissolution/dispersion of the flame-retardant system, and/or other additive, in the vinyl aromatic monomer, as previously defined, and the suspension in water of the monomer, followed by polymerization in the presence of possible polymerization additives, known to experts in the field, among which stabilizing agents of the suspension, chain transfer agents, expansion coadjuvants, nucleating agents, plasticizers, etc. The "beads" thus obtained have a substantially spherical form, both before and after expansion.

The beads are prepared by polymerization in aqueous suspension using inorganic salts of phosphoric acid, for example tri-calcium phosphate or magnesium pyrophosphate, as suspending agents. These salts can be added to the polymerization mixture either already finely subdivided or synthesized in situ by reaction, for example, between sodium pyrophosphate and magnesium sulfate.

Said inorganic salts are assisted in their suspending action by anionic surface-active agents, for example sodium dodecylbenzene sulfonate or their precursors such as sodium metabisulfite, as described in US patent 3,631,014.

The polymerization can also be carried out in the presence of organic suspending agents such as polyvinylpyrrolidone, polyvinyl alcohol, etc..

In the process in suspension, the polymerization reaction is generally triggered by an initiating system. The initiating system normally comprises two peroxides, the first with a halving time of an hour at 85-95°C and the other with a halving time of an hour at 110-120°C. Examples of these initiators are tert-butylperoxy-2-ethylhexanoate and tert-butylperbenzoate.

The vinyl aromatic polymer which is obtained at the end of the polymerization has an average molecular weight Mw ranging from 50,000 to 300,000, preferably from 70,000 to 250,000. In general, more details on procedures for the preparation of expandable vinyl aromatic polymers in aqueous suspension or, more generally, polymerization in suspension, can be found in Journal of Macromolecular Science, Review in Macromolecular Chemistry and Physics C31 (263) 215-299 (1991).

To improve the stability of the suspension, it is possible to increase the viscosity of the reagent mixture (vinyl aromatic monomeric base plus possible additives), to be suspended in water, by dissolving vinyl aromatic polymer therein, up to a concentration of 1 to 30% by weight, preferably 5 to 20%, calculated with respect to the monomeric base. The solution can be obtained by dissolving a preformed polymer in the reagent mixture (for example fresh polymer or waste-products from previous polymerizations and/or expansions) or by a mass pre-polymerization of the monomer, or mixture of monomers, until the previously mentioned concentrations are obtained, and subsequently continuing the polymerization in aqueous suspension in the presence of the remaining additives.

At the end of the polymerization, substantially spherical beads of expandable polymer are obtained, with an average diameter ranging from 0.2 to 2 mm, preferably from 1 to 1.5 mm, in which said filler is homogeneously dispersed.

The beads are then discharged from the polymerization reactor and washed, in continuous or batchwise, with non-ionic surface-active agents or, alternatively, with acids, as described in US patent 5,041,465. The polymer beads can then be treated thermally with hot air ranging from 30 to 60°C.

At the end of the polymerization, the expandable beads obtained are subjected to pre-treatment which is generally applied to conventional expandable compositions and which essentially consists in:
1. covering the beads with a liquid antistatic agent selected from amines, ethoxylated tertiary alkylamines, ethylene oxide/propylene oxide copolymers, etc.. Said agent allows the coating to adhere and facilitates the screening of the beads prepared in suspension;
2. applying the coating to said beads, said coating essentially consisting of a mixture of mono-, di-and tri-esters of glycerine (or other alcohols) with fatty acids, and metal stearates such as zinc and/or magnesium stearate.

A further object of the present invention relates to expandable compositions in vinyl aromatic-based beads capable of providing low-density expanded products and with an improved insulating capacity which comprise:
a. a matrix obtained by polymerizing 50-100% by weight of one or more vinyl aromatic monomers, for example styrene or a mixture of styrene containing up to 25% by weight of α-methylstyrene, and 0-50% by weight of at least one copolymerizable monomer;
b. 1-10% by weight, calculated with respect to the polymeric matrix (a), of an expanding agent;
c. 0-3% by weight, preferably 0.4-2.2%, calculated with respect to the polymeric matrix (a), of a self-extinguishing brominated additive;
d. 0-1% by weight, preferably 0.01-0.4%, calculated with respect to the polymeric matrix (a), of a synergic agent (c) containing at least one thermolabile C-O-O-C or C-C bond;
e. 0-500 ppm by weight, preferably 10-80 ppm, calculated with respect to the polymeric matrix (a), of an amine having general formula (I),
obtainable with the process in aqueous suspension previously described.

Some illustrative and non-limiting examples are provided hereunder for a better understanding of the present invention and for its embodiment.

### EXAMPLE 1

A mixture is charged into a closed and stirred container, consisting of 150 parts by weight of water, 0.2 parts of sodium pyrophosphate, 97 parts of styrene, 3 parts of alpha-methylstyrene, 0.30 parts of dibenzoyl peroxide, 0.25 parts of tert-butylperbenzoate, 0.70 parts of hexabromocyclododecane Saytex HP 900 sold by Albemarle, 0.2 parts of dicumyl peroxide and 0.002 parts of ethoxylated alkyl amine Atmer 163 sold by Uniquema. The mixture is heated under stirring to 90°C.

After about 2 hours at 90°C, 4 parts of a solution of polyvinylpyrrolidone at 10% are added. The mixture is heated to 100°C, still under stirring, for a further 2 hours, 7 parts of a 70/30 mixture of n-pentane and i-pentane are added, the whole mixture is heated for a further 4 hours to 120°C, it is then cooled to 65°C in an hour and from 65°C to 30°C in 120 minutes. The reaction container is then discharged.

The beads of expandable polymer thus produced are subsequently recovered and washed with demineralized water containing 0.05% of a non-ionic surface-active agent consisting of a fatty alcohol condensed with ethylene oxide and propylene oxide, sold by Huntsman under the trade-name of Empilan 2638. The granules are then dried in a stream of warm air, with the addition of 0.02% of a non-ionic surface-active agent, consisting of a condensate of ethylene oxide and propylene oxide on a glycerine base, sold by Dow (Voranol CP4755) and are subsequently screened separating the fraction with a diameter ranging from 1 to 1.5 mm.

This fraction proved to represent 40%, 30% being the fraction between 0.5 and 1 mm, 15% the fraction between 0.2 and 0.5 mm, and 15% the gross fraction, between 1.5 and 3 mm.

0.2% of glyceryl monostearate and 0.1% of zinc stearate are then added to the fraction of 1 to 1.5 mm.

The product is pre-expanded with vapour at a temperature of 100°C, at two densities, i.e. 14 and 17 g/l, left to age for 1 day and used for the moulding of blocks (having dimensions of 1040 x 1030 x 550 mm). The diameter of the cells of beads expanded at 17 g/l was 120-130 microns.

The blocks were then cut to prepare flat sheets on which the thermal conductivity and compression stress at 10% of deformation are measured. The thermal conductivity, measured after 5 days of residence in an oven at 70°C, was 36.5 mW/mK at 14 g/l and 34 mW/mK at 17 g/l. The compression stress at 10% of deformation, measured at 14 g/l was 75 KPa. Test-samples were taken from a sheet for the fire behaviour test according to the regulation DIN 4102. The test-samples passed the test.

### EXAMPLE 2

Example 1 is repeated but cooling from 65°C to 30°C in 140 minutes. The thermal conductivity and all the other characteristics remained unvaried.

### EXAMPLE 3

Example 1 is repeated but increasing the Atmer 163 to 0.004 parts. The thermal conductivity and all the other characteristics remained unvaried.

### EXAMPLE 4

Example 1 is repeated but substituting Atmer 163 with an equal quantity of stearyl melamine. The thermal conductivity and all the other characteristics remained unvaried.

### Comparative EXAMPLE 1

A mixture is charged into a closed and stirred container, consisting of 150 parts by weight of water, 0.2 parts of sodium pyrophosphate, 100 parts of styrene, 0.30 parts of dibenzoyl peroxide, 0.25 parts of tert-butylperbenzoate, 0.70 parts of hexabromocyclododecane Saytex HP 900 sold by Albemarle, 0.2 parts of dicumyl peroxide and 0.002 parts of ethoxylated alkyl amine Atmer 163 sold by Uniquema and 0.07 parts of low-molecular-weight (5,000 g/mol) polyethylene wax. The mixture is heated under stirring to 90°C.

After about 2 hours at 90°C, 4 parts of a solution of polyvinylpyrrolidone at 10% are added. The mixture is heated to 100°C, still under stirring, for a further 2 hours, 7 parts of a 70/30 mixture of n-pentane and i-pentane are added, the whole mixture is heated for a further 4 hours to 120°C, it is then cooled to 65°C in an hour and from 65°C to 30°C in 120 minutes. The batch is then discharged and the same operating procedure is adopted as in Example 1. The product is pre-expanded with vapour at a temperature of 100°C, with two densities, i.e. 14 and 17 g/l, left to age for 1 day and used for the moulding of blocks (having dimensions of 1040 x 1030 x 550 mm). The diameter of the cells of beads expanded at 17 g/l was 80-90 microns.

The blocks were then cut to prepare flat sheets on which the thermal conductivity and compression stress at 10% of deformation are measured. The thermal conductivity, measured after 5 days of residence in an oven at 70°C, was 37.0 mW/mK at 17 g/l. The compression stress at 10% of deformation, measured at 14 g/l was 77 KPa.

### Comparative EXAMPLE 2

Comparative example 1 is repeated but cooling the batch from 65 to 35°C in 5 minutes with cold water. The batch is then discharged and the same operating procedure is adopted as in Example 1. The product is pre-expanded with vapour at a temperature of 100°C, with two densities, i.e. 14 and 17 g/l, left to age for 1 day and used for the moulding of blocks (having dimensions of 1040 x 1030 x 550 mm). The diameter of the cells of beads expanded at 17 g/l was 60 microns.

The blocks were then cut to prepare flat sheets on which the thermal conductivity and compression stress at 10% of deformation are measured. The thermal conductivity, measured after 5 days of residence in an oven at 70°C, was 38 mW/mK at 17 g/l. The compression stress at 10% of deformation, measured at 14 g/l was 80 KPa.

## Claims

1. A process for the preparation of beads of expandable vinyl aromatic polymers, capable of producing expanded articles with a reduced thermal conductivity, by means of polymerization in aqueous suspension which comprises:
a. polymerizing at least one vinyl aromatic monomer, for example styrene or a mixture of styrene containing up to 25% by weight of α-methylstyrene, in aqueous suspension in the presence of a peroxide initiator system, active at a temperature higher than 80°C, an expanding agent, added before, during or after the polymerization, and possibly in the presence of:
an amine having the general formula
Rl-N-R2R3 (I)
wherein R1 represents a C₁₀-C₂₅ alkyl, iso-alkyl, aromatic, alkylaromatic radical, R2 and R3, the same or different, represent a hydrogen atom or a C₁-C₁₀ alkyl radical optionally hydroxylated, a C₄-C₁₂ iso-alkyl radical, optionally hydroxylated, a C₆-C₁₈ aromatic radical, a C₇-C₁₈ alkylaromatic radical or the group -N-R2R3 forms a melamine unit or a C₄-C₈ heterocyclic unit with at least one nitrogen in the cycle; and
a flame retardant system comprising a brominated additive with a bromine content higher than 30% by weight;
b. cooling the aqueous suspension, at the end of the polymerization, with a cooling rate of 0.2-0.3°C/min,
wherein the cooling rate is measured starting from a temperature equal to the glass transition temperature (Tg), of the end polymer product, raised by 5-25°C up to the Tg of the same polymer lowered by at least 10°C, preferably lowered by a value ranging from 10 to 40°C.

2. The process according to claim 1, wherein the amine having general formula (I) is added in a quantity ranging from 0 to 500 ppm, with respect to the weight of the monomeric base.

3. The process according to any of the previous claims, wherein the amine is selected from stearyl melamine and an ethoxylated alkyl amine wherein the alkyl group has 15-16 carbon atoms.

4. The process according to any of the previous claims, wherein the expanding agent is selected from aliphatic or cyclo-aliphatic hydrocarbons containing from 3 to 6 carbon atoms; halogenated derivatives of aliphatic hydrocarbons containing from 1 to 3 carbon atoms; carbon dioxide; ethyl alcohol.

5. The process according to any of the previous claims, wherein the expanding agent is used in a quantity ranging from 1 to 10% by weight.

6. The process according to any of the previous claims, wherein the flame retardant system comprises brominated aliphatic, cyclo-aliphatic, aromatic compounds with a bromine content higher than 30% by weight.

7. The process according to any of the previous claims, wherein the flame retardant agents are used in a quantity ranging from 0.1 to 3% by weight.

8. The process according to any of the previous claims, wherein the flame retardant system comprises a synergic agent containing at least one thermolabile C-C or O-O bond.

9. The process according to any of the previous claims, wherein the synergic agent is used in a quantity ranging from 0 to 1% by weight.

10. Expandable compositions in vinyl aromatic-based beads capable of providing low-density expanded products and with an improved insulating capacity which comprise:
a. a matrix obtained by polymerizing 50-100% by weight of one or more vinyl aromatic monomers and 0-50% by weight of at least one copolymerizable monomer;
b. 1-10% by weight, calculated with respect to the polymeric matrix (a), of an expanding agent;
c. 0-3% by weight, calculated with respect to the polymeric matrix (a), of a self-extinguishing brominated additive;
d. 0-1% by weight, calculated with respect to the polymeric matrix (a), of a synergic agent (c) containing at least one thermolabile C-O-O-C or C-C bond;
e. 0-500 ppm by weight, calculated with respect to the polymeric matrix (a), of an amine having general formula (I),
obtainable with the process in aqueous suspension described in the previous claims.

11. Expanded articles obtainable by the expansion and sintering of vinyl aromatic-based beads having the composition according to claim 10.

## Patentansprüche

1. Verfahren zur Herstellung von expandierbaren vinylaromatischen Polymerkügelchen, die zur Herstellung von expandierten Gegenständen mit einer verringerten Wärmeleitfähigkeit geeignet sind, durch Polymerisation in wässriger Suspension umfassend:
a. Polymerisieren in wässriger Suspension von mindestens einem vinylaromatischen Monomer, zum Beispiel Styrol oder einer Mischung von Styrol enthaltend bis zu 25 Gew.-% α-Methylstyrol, in der Gegenwart eines Peroxidinitiatorsystems, das bei einer Temperatur höher als 80°C aktiv ist, ein Treibmittel, hinzugefügt vor, während oder nach der Polymerisation, und gegebenenfalls in der Anwesenheit von: einem Amin mit der allgemeinen Formel
R1-N-R2R3 (I)
wobei R1 eine C₁₀-C₂₅ Alkyl, Isoalkyl, aromatische, alkylaromatische Gruppe darstellt, R2 und R3, die gleich oder verschieden, ein Wasserstoffatom oder eine gegebenenfalls hydroxilierte C₁-C₁₀ Alkylgruppe, eine gegebenenfalls hydroxilierte C₄-C₁₂ Isoalkyl-Gruppe, eine C₆-C₁₈ aromatische Gruppe, eine C₇-C₁₈ alkylaromatische Gruppe darstellen, oder die Gruppe -N-R2R3 eine Melamineinheit oder ein C₄-C₈ heterozyklische Einheit mit mindestens einem Stickstoff im Ring bildet; und
ein Flammenschutzsystem umfassend ein bromiertes Mittel mit einem Bromanteil höher als 30 Gew.-%;
b. Kühlen der wässrigen Suspension mit einer Kühlrate von 0,2 bis 0,3 °C/Min. am Ende der Polymerisation, wobei die Kühlrate gemessen wird ausgehend von einer Temperatur gleich der Glasübergangstemperatur (Tg) des Polymerendprodukts, durch 5-25°C erhöht, bis zu der Tg des gleichen Polymers verringert um mindestens 10°C, vorzugsweise verringert durch einen Wert reichend von 10-40°C.

2. Verfahren nach Anspruch 1, wobei das Amin mit der allgemeinen Formel (I) in einer Quantität von 0 bis 500 ppm reichend, bezogen auf das Gewicht der Monomerbase, hinzugefügt wird.

3. Verfahren nach einem der vorhergehenden Ansprüche, wobei das Amin ausgewählt ist aus Stearylmelamin und einem ethoxylierten Alkylamin, wobei die Alkylgruppe 15-16 Kohlenstoffatome aufweist.

4. Verfahren nach einem der vorhergehenden Ansprüche, wobei das Treibmittel aus aliphatischen oder cycloaliphatischen Kohlenwasserstoffen, die 3 bis 6 Kohlenstoffatomen enthalten; halogenierten Derivaten von aliphatischen Kohlenwasserstoffen, die 1 bis 3 Kohlenstoffatome enthalten; Kohlenstoffdioxid; Ethylalkohol ausgewählt ist.

5. Verfahren nach einem der vorhergehenden Ansprüche, wobei das Treibmittel in einer Quantität von 1 bis 10 Gew.-% reichend verwendet wird.

6. Verfahren nach einem der vorhergehenden Ansprüche, wobei das Flammenschutzmittel bromierte aliphatische, cykloaliphatische, aromatische Verbindungen mit einem Bromanteil höher als 30 Gew.-% umfasst.

7. Verfahren nach einem der vorhergehenden Ansprüche, wobei die Flammenschutzmittel in einer Quantität reichend von 0,1 bis 3 Gew.-% verwendet werden.

8. Verfahren nach einem der vorhergehenden Ansprüche, wobei das Flammenschutzmittel ein synergisches Mittel umfasst, das mindestens eine thermolabile C-C oder O-O Bindung enthält.

9. Verfahren nach einem der vorhergehenden Ansprüche, wobei das synergische Mittel in einer Quantität reichend von 0 bis 1 Gew.-% verwendet wird.

10. Expandierbare Zusammensetzungen in vinylaromatisch basierten Kügelchen dazu geeignet, expandierte Produkte niedriger Dichte und mit verbesserter Isolationskapazität bereitzustellen, die umfassen:
a. eine Matrix erhalten durch Polymerisieren von 50-100 Gew.-% eines oder mehrerer vinylaromatischer Monomere und 0-50 Gew.-% mindestens eines copolymerisierbaren Monomers;
b. 1-10 Gew.-% eines expandierten Mittels, berechnet bezogen auf die Polymermatrix (a);
c. 0-3 Gew.-% eines selbstlöschenden bromierten Zusatzstoffs, berechnet bezogen auf die Polymermatrix (a);
d. 0-1 Gew.-% eines synergischen Mittels (c) das mindestens eine thermolabile C-O-O-C oder C-C Bindung, berechnet bezogen auf die Polymermatrix (a) enthält;
e. 0-500 Gew.-ppm eines Amins mit der allgemeinen Formel (I), berechnet bezogen auf die Polymermatrix (a),
erhaltbar durch das in den vorhergehenden Ansprüchen beschriebene Verfahren in wässriger Lösung.

11. Expandierte Gegenstände erhaltbar durch Expansion und Sintern von vinylaromatisch-basierten Kügelchen mit der Zusammensetzung gemäß Anspruch 10.

## Revendications

1. Procédé de préparation de billes de polymères vinyliques aromatiques expansibles, capable de produire des articles expansés avec une conductivité thermique réduite, au moyen d'une polymérisation en suspension aqueuse, comprenant :
a) la polymérisation d'au moins un monomère vinylique aromatique, par exemple un styrène ou un mélange de styrènes contenant jusqu'à 25 % en poids d'alpha-méthylstyrène, en suspension aqueuse en présence d'un système d'amorçage peroxydique, active à une température supérieure à 80 °C, un agent expansif, ajouté avant, pendant ou après la polymérisation, et peut-être en présence d'une amine ayant la formule générale :
R1-N-R2R3 (i)
dans laquelle R1 représente un radical alkyle en C₁₀-C₂₅, iso-alkyle, aromatique, alkylaromatique, R2 et R3, étant identiques ou différents, représentent un atome d'hydrogène ou un radical alkyle en C₁-C₁₀ éventuellement hydroxylé, un radical iso-alkyle en C₄-C₁₂ éventuellement hydroxylé, un radical aromatique en C₆-C₁₈, un radical alkylaromatique en C₇-C₁₈ ou le groupe -N-R2R3 forme un motif mélamine ou un motif hétérocyclique en C₄-C₈, avec au moins un atome d'azote dans le cycle ; et
un système ignifugeant comprenant un additif bromé avec une teneur en brome supérieure à 30 % en poids ;
b) le refroidissement de la suspension aqueuse, à la fin de la polymérisation, avec une vitesse de refroidissement de 0,2 à 0,3 °C/min.,
dans lequel la vitesse de refroidissement est mesurée en commençant par une température égale à la température de transition vitreuse (Tg) du produit polymère final, augmentée de 5 à 25 °C jusqu'à la Tg de ce même polymère, rabaissée d'au moins 10 °C, de préférence rabaissée d'une valeur allant de 10 à 40 °C.

2. Procédé selon la revendication 1, dans lequel l' amine ayant la formule générale (I) est ajoutée dans une quantité allant de 0 à 500 ppm, par rapport au poids de la base monomère.

3. Procédé selon l'une quelconque des revendications précédentes, dans lequel l'amine est choisie parmi une mélamine stéarylique et une alkylamine éthoxylée dans laquelle le groupe alkyle comprend 15 ou 16 atomes de carbone.

4. Procédé selon l'une quelconque des revendications précédentes, dans lequel l'agent expansif est choisi parmi des hydrocarbures aliphatiques ou cyclo-aliphatiques contenant de 3 à 6 atomes de carbone ; des dérivés halogénés d'hydrocarbures aliphatiques contenant de 1 à 3 atomes de carbone ; le dioxyde de carbone ; l'alcool éthylique.

5. Procédé selon l'une quelconque des revendications précédentes, dans lequel l'agent expansif est utilisé dans une quantité allant de 1 à 10 % en poids.

6. Procédé selon l'une quelconque des revendications précédentes, dans lequel le système ignifugeant comprend des composés aliphatiques, cyclo-aliphatiques, aromatiques, bromés avec une teneur en brome supérieure à 30 % en poids.

7. Procédé selon l'une quelconque des revendications précédentes, dans lequel les agents ignifugeants sont utilisés dans une quantité allant de 0,1 à 3 % en poids.

8. Procédé selon l'une quelconque des revendications précédentes, dans lequel le système ignifugeant comprend un agent synergique contenant au moins une liaison C-C ou O-O thermolabile.

9. Procédé selon l'une quelconque des revendications précédentes, dans lequel l'agent synergique est utilisé dans une quantité allant de 0 à 1 % en poids.

10. Compositions expansibles dans des billes à base de polymères vinyliques aromatiques capables de donner des produits expansés de basse densité et ayant une capacité isolante améliorée comprenant :
a) une matrice obtenue par polymérisation à 50 à 100 % en poids d'un ou plusieurs monomères vinyliques aromatiques et à 0 à 50 % en poids d'au moins un monomère pouvant être copolymérisé ;
b) 1 à 10 % en poids, calculé par rapport à la matrice polymère (a), d'un agent expansif ;
c) 0 à 3 % en poids, calculé par rapport à la matrice polymère (a), d'un additif bromé auto-extincteur ;
d) 0 à 1 % en poids, calculé par rapport à la matrice polymère (a), d'un agent synergique (c) contenant au moins une liaison C-O-O-C ou C-C thermolabile ;
e) 0 à 500 ppm en poids, calculé par rapport à la matrice polymère (a), d'une amine ayant la formule générale (I),
pouvant être obtenues par le procédé en suspension aqueuse décrit dans les revendications précédentes.

11. Articles expansés pouvant être obtenus par l'expansion et le frittage de billes à base de polymères vinyliques aromatiques ayant la composition selon la revendication 10.
